# EUROPÄISCHE PATENTANMELDUNG

(11) **EP 4 803 414 A1**
(43) Veröffentlichungstag der Anmeldung: **09.09.2026**
(21) Anmeldenummer: 26152643.8
(22) Anmeldetag: 19.01.2026
(51) Int. Cl.: B64C 3/56, B64C 9/24

(54) **VORRICHTUNG ZUR BETÄTIGUNG EINES HOCHAUFTRIEBSSYSTEMS**

(30) Priorität: 07.03.2025 DE 102025108679
(71) Anmelder: Liebherr-Aerospace Lindenberg GmbH, 88161 Lindenberg (DE)
(72) Erfinder: GAILE, Anton, 88299 Leutkirch (DE)
(74) Vertreter: Lorenz Seidler Gossel Part. mbB

(57) **Zusammenfassung**

Die vorliegende Erfindung betrifft eine Vorrichtung zur Betätigung eines Hochauftriebssystems eines Flügels mit einem festen Teil (1) und einem beweglichen Teil (2), wobei eine Antriebseinheit (11, 14) zum Antreiben des Hochauftriebssystems und ein Gelenk zwischen dem festen Teil und dem beweglichen Teil des Flügels vorhanden ist, wobei das Gelenk derart ausgelegt ist, dass eine Wirkverbindung der Antriebseinheit mit dem im beweglichen Teil des Flügels angeordneten Hochauftriebssystem unabhängig von einer Position des beweglichen Teils des Flügels gewährleistet ist. Mit einer erfindungsgemäßen Vorrichtung lässt sich erreichen, dass auch bei einem hochgeklappten beweglichen Flügelteil eine Wirkverbindung zwischen einer beispielsweise zentral angeordneten Antriebseinheit und einem im beweglichen Flügelteil angeordneten Hochauftriebssystem zuverlässig bestehen bleibt.

## Beschreibung

Die vorliegende Erfindung betrifft eine Vorrichtung zur Betätigung eines Hochauftriebssystems, vorzugsweise eines Hochauftriebssystems in einem beweglichen Teil eines schwenkbaren bzw. klappbaren Flügels eines Luftfahrzeugs.

Zur Steigerung der Aerodynamischen Effizienz bei zukünftigen Flugzeugen ist es aktuell geplant, sehr dünne und langgestreckte Flügel zu verwenden, ähnlich wie dieses bereits bei Segelflugzeugen seit langem der Fall ist. Da dieses jedoch dazu führt, dass die Flügellänge die aktuell definierten Flügellängen für die einzelnen Flugzeugklassen übersteigt, ist es geplant diese Flugzeuge mit klappbaren Flügeln auszustatten.

Am Boden werden die Flügelenden nach oben geklappt, wodurch die effektive Spannweite am Gate oder bereits auf dem Taxiway wieder innerhalb der vorgegebenen Maximalwerte für den jeweiligen Flugzeugtyp liegt. Wenn der klappbare Teil des Flügels sehr lang ist, benötigen diese Flugzeuge auch im klappbaren Teil des Flügels ein Hochauftriebssystem (Slat System) um bei großen Anstellwinkeln einen Strömungsabriss zu verhindern.

Eine besondere Herausforderung stellt hierbei der Antrieb des Teils des Hochauftriebssystems dar, welcher sich im beweglichen Flügelendes befindet, da der Flügel in diesem Bereich sehr dünn ist und auch die Energieführung über den Gelenkpunkt sehr schwierig ist.

Herkömmlicherweise wird in der Regel das Hochauftriebssystem zentral angetrieben und beim Klappen des Flügels wird die Verbindung des Wellensystems, welches das Klappensystem antreibt, aufgetrennt.

Dieses hat jedoch den Nachteil, dass alle Teile des Wellensystems separat in ihrer Position fixiert werden müssen und auch das Einkoppeln der Wellenenden beim Absenken des Flügels überwacht werden müsste.

Der vorliegenden Erfindung liegt vor diesem Hintergrund die Aufgabe zugrunde, die Nachteile des Stands der Technik abzumildern oder gar ganz zu beseitigen.

Insbesondere liegt der vorliegenden Erfindung die spezifische Aufgabe zugrunde, ein einfaches, kostengünstiges, leichtes und robustes Antriebskonzept für ein Hochauftriebssystem in eine beweglichen teil eines schwenkbaren Flügels zur Verfügung zu stellen.

Diese Aufgabe wird durch die Vorrichtung mit den Merkmalen des Anspruchs 1 sowie die weiteren Gegenstände der unabhängigen Ansprüche gelöst. Vorteilhafte Ausführungsformen der Erfindung sind Gegenstand der Unteransprüche.

Demnach ist eine Vorrichtung zur Betätigung eines Hochauftriebssystems eines Flügels mit einem festen Teil und einem beweglichen Teil vorgesehen, wobei eine Antriebseinheit zum Antreiben des Hochauftriebssystems und ein Gelenk zwischen dem festen Teil und dem beweglichen Teil des Flügels vorhanden ist.

Das Gelenk ist derart ausgelegt, dass eine Wirkverbindung der Antriebseinheit mit dem im beweglichen Teil des Flügels angeordneten Hochauftriebssystem unabhängig von einer Position des beweglichen Teils des Flügels gewährleistet ist.

In anderen Worten betrifft die vorliegende Erfindung insbesondere eine Vorrichtung zum Betätigen eines Hochauftriebssystems, welches in einem beweglichen Flügelsegment angeordnet ist.

Eine Idee der vorliegenden Erfindung besteht darin, dass das Wellensystem, welches das Hochauftriebssystem im beweglichen Teil des Flügels antreibt, derart über das Gelenk des Flügels führt, dass es beim Verschwenken oder Hochklappen des beweglichen Teils des Flügels nicht zu einer Entkoppelung des Wellenstrangs kommt bzw. die Kopplung zwischen einer beispielsweise im Flugzeugrumpf angeordneten Antriebseinheit und dem Wellensystem des Hochauftriebssystems im beweglichen Teil des Flügels auch bei einem Verschwenken des beweglichen Teils des Flügels bestehen bleibt.

Hierdurch wird es ermöglicht, dass das Hochauftriebssystem im beweglichen Teil des Flügels von derselben Antriebseinheit angetrieben werden kann wie das Hochauftriebssystem im festen Teil des Flügels.

Das Hochauftriebssystem im festen Teil des Flügels und das Hochauftriebssystem im beweglichen Teil des Flügels können ein gemeinsames Hochauftriebssystem bilden. Daher können die Hochauftriebssysteme im festen und beweglichen Teil des Flügels auch als jeweils als Teil des Hochauftriebssystems im festen bzw. beweglichen teil des Flügels bezeichnet werden.

Bei einer erfindungsgemäßen Vorrichtung können der feste Teil und der bewegliche Teil des Flügels jeweils mit einem Hochauftriebssystem ausgestattet sein und es kann ein Wellensystem vorhanden sein, welches das im festen Teil des Flügels befindliche Hochauftriebssystem mit dem im beweglichen Teil des Flügels befindlichen Hochauftriebssystem verbindet.

Das Wellensystem ist vorzugsweis derart ausgebildet, dass es bei einem Verschwenken oder Hochklappen des beweglichen Teils des Flügels eine Kopplung der Hochauftriebssysteme mit der Antriebseinheit aufrechterhält.

In anderen Worten wird das Wellensystem durch das Bewegen des beweglichen Teils des Flügels nicht entkoppelt.

Das Wellensystem kann derart ausgelegt sein, dass es einen beweglich bzw. schwenkbar gelagerten Lagerungspunkt besitzt, welcher vorzugsweise benachbart zu dem Schwenkpunkt des beweglichen Teils des Flügels gelagert ist und / oder mit dem Schwenkpunkt des beweglichen Teils des Flügels zusammenfällt.

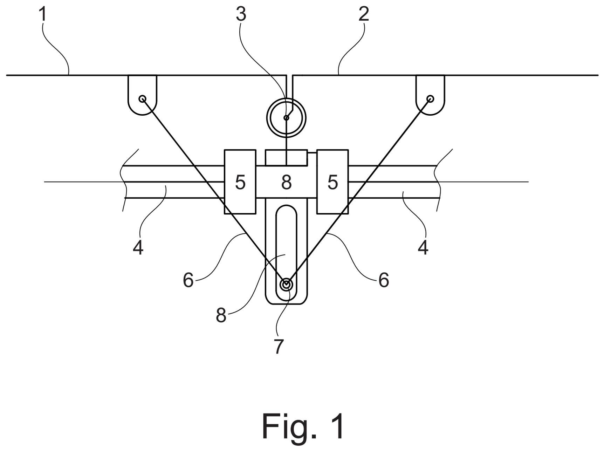

In anderen Worten kann der beweglich gelagerte Lagerungspunkt des Wellensystems mit der Bewegung des beweglichen Teils des Flügels zumindest teilweise "mitwandern". Dies ist beispielhaft in Fig. 1 gezeigt.

Alternativ oder zusätzlich kann das Wellensystem derart ausgelegt sein, dass der Lagerungspunkt des Wellensystems beim Verschwenken oder Hochklappen des beweglichen Teils des Flügels um einen Winkel geschwenkt wird, welcher ca. halb so groß ist wie der Winkel, um welchen der bewegliche Teil des Flügels schwenkbar ist oder geschwenkt wird.

Beispielsweise wird der bewegliche Teil des Flügels um 90° geschwenkt und der Lagerungspunkt des Wellensystems und / oder mindestens eine mit dem Lagerungspunkt verbundene Welle wird um 45 ° geschwenkt.

Der Winkel muss nicht zwingend genau halb so groß (=50%) sein, sondern kann sich auch in einem Bereich von 40 % bis 60 % des Winkels bewegen, um welchen der bewegliche Teil des Flügels schwenkbar ist oder geschwenkt wird.

Der Lagerungspunkt kann beispielsweise durch eine entsprechend ausgelegte Kinematik bzw. ein Führungsbauteil entsprechend bewegt oder verschwenkt werden.

Das Wellensystem kann mindestens zwei Wellen aufweisen, welche an dem Lagerungspunkt des Wellensystems angreifen und welche vorzugsweise jeweils mindestens ein Gelenk aufweisen, welches dazu ausgelegt ist, vorzugsweise in einem Zustand der drehenden Welle eine Verschwenkung des Lagerungspunkts des Wellensystems und / oder eine Verschwenkung mindestens einer Welle um den lagerungspunkt um einen Winkel zu ermöglichen, welcher ca. halb so groß ist wie der Winkel, um welchen der bewegliche Teil des Flügels schwenkbar ist oder geschwenkt wird.

Der Winkel muss auch in diesem Fall nicht zwingend genau halb so groß (=50%) sein, sondern kann sich auch in einem Bereich von 40 % bis 60 % des Winkels bewegen, um welchen der bewegliche Teil des Flügels schwenkbar ist oder geschwenkt wird.

Das Wellensystem kann auch jeweils einen festen Lagerpunkt vor und nach einem Lagerungspunkt oder Drehpunkt des beweglichen Teils des Flügels aufweisen und vorzugsweise kann zwischen den beiden Lagerpunkten mindestens ein Gelenk vorhanden sein, welches ein Verschwenken mindestens einer Welle des Wellensystems um einen Winkel ermöglicht, welcher so groß ist wie der Winkel, um welchen der bewegliche Teil des Flügels schwenkbar ist oder geschwenkt wird.

Der Winkel muss jedoch nicht zwingend genau so groß (=100%) sein, sondern kann sich auch in einem Bereich von 80 % bis 100 % des Winkels bewegen, um welchen der bewegliche Teil des Flügels schwenkbar ist oder geschwenkt wird.

Das mindestens eine Gelenk zwischen den beiden Lagerpunkten kann vorzugsweise auf beiden Seiten des Gelenks mit einem längenveränderbaren, drehfesten Schiebestück ausgestattet sein, welches dazu ausgelegt ist, eine sich beim Verschwenken des beweglichen Teils des Flügels ergebende Abstandsänderung zwischen den beiden Lagerpunkten zu kompensieren bzw. auszugleichen.

Das Schiebestück kann beispielweise ein Teleskopgestände sein, welches vorzugsweise eine Verbindung zwischen dem Gelenk und einer daran angreifenden Welle bildet.

Bei dem Gelenk kann es sich um ein doppeltes Kreuzgelenk oder um ein doppeltes homokinetisches Gelenk handeln.

Alternativ oder zusätzlich kann das Gelenk zwei miteinander gekoppelte Getriebe, vorzugsweise Winkelgetriebe aufweisen, die vorzugsweise in einem Drehpunkt des beweglichen Teils des Flügels an dem festen Teil des Flügels angeordnet sind, wobei das Gelenk vorzugsweise dazu ausgelegt ist, eine Drehbewegung eines Wellensystems von dem festen Teil des Flügels in den bewgelichen Teil des Flügels zu übertragen.

Weiterhin alternativ oder zusätzlich kann das Gelenk mindestens eine flexible und / oder biegsame Welle aufweisen, welche dazu ausgelegt ist, eine Drehbewegung eines Wellensystems von dem festen Teil des Flügels in den beweglichen Teil des Flügels zu übertragen.

Weiterhin kann das Moment im Wellensystem durch mindestens einen Drehmomentbegrenzer begrenzt werden, welcher vorzugsweise direkt benachbart zu dem mindestens einen Gelenk angeordnet ist.

Sind mehrere Gelenke vorgesehen, kann jedes mit einem Drehmomentbegrenzer ausgestattet sein.

In anderen Worten lassen sich Merkmale der vorliegenden Erfindung wie folgt beschreiben:
Die vorliegende Erfindung ermöglicht vorzugsweise eine einfachere, leichtere und vor allem kostengünstigere Lösung für den Antrieb eines Hochauftriebssystems, insbesondere eines Slat-Systems (d.h. eines Hochauftriebssystems mit Klappen an der Flügelvorderkante), welches sich im beweglichen Teil eines schwenkbaren bzw. klappbaren Flügels befindet.

Für diesen Zweck ist vorzugsweise ein Gelenk oder Gelenkmechanismus zwischen dem beweglichen Teil und dem festen Teil des Flügels vorgesehen, welcher dazu ausgelegt ist, die Kopplung zwischen den Wellensystemen der Hochauftriebssysteme im festen und beweglichen Teil des Flügels bzw. einer Antriebseinheit und dem Hochauftriebssystem im beweglichen Teil des Flügels unabhängig von einer Verschwenkposition des beweglichen Flügels (also auch bei verschwenktem bzw. hochgeklapptem beweglichen Flügelteil) aufrecht zu erhalten.

Vorzugsweise ist bei einer erfindungsgemäßen Vorrichtung eine im festen Flügelteil oder im Flugzeugrumpf angeordnete Antriebseinheit vorhanden, mittels welcher die Hochauftriebssysteme im festen und / oder beweglichen Flügelteil antreibbar oder angetrieben sind.

In diesem Fall kann nur eine Antriebseinheit für mehrere Hochauftriebssysteme zum Einsatz kommen.

Vorzugsweise ist bei einer erfindungsgemäßen Vorrichtung ein Gelenkmechanismus bzw. mindestens ein Gelenk zwischen dem beweglichen Teil des Flügels und dem festen Teil des Flügels derart ausgelegt, dass ein Wellensystem, welches ein im festen Teil des Flügels befindliches Hochauftriebssystem mit einem im beweglichen Teil des Flügel befindlichen Hochauftriebssystem verbindet, beim Hochklappen bzw. Verschwenken des Flügels nicht entkoppelt wird.

In anderen Worten wird die antriebstechnische Kopplung der Hochauftriebssysteme im festen und beweglichen Teil des Flügels durch den Gelenkmechanismus unabhängig von der Schwenkposition des beweglichen Teils des Flügels bereitgestellt bzw. aufrechterhalten.

Bei einer erfindungsgemäßen Vorrichtung kann das Wellensystem derart ausgelegt sein, dass es mindestens einen Lagerungspunkt aufweist, welcher nahe oder benachbart zu dem Schwenkpunkt des Flügels bzw. dessen beweglichen Teils gelagert ist. Der Lagerungspunkt kann schwenkbar gelagert sein.

Der Lagerungspunkt kann beim Hochklappen des beweglichen teils des Flügels durch eine geeignete Kinematik um ca. den halben Winkel wie der Flügel selbst geschwenkt werden.

Die Wellen, welche an diesem schwenkbaren Lagerungspunkt angreifen, können Gelenke aufweisen, welche vorzugsweise jeweils in der Lage sind, mindestens den halben Schwenkwinkel des beweglichen teils des Flügels zu ermöglichen, wobei das Gelenk diesen Winkel zumindest ohne Drehbewegung ermöglicht, bevorzugt jedoch auch bei drehender Welle ermöglicht. Hierbei können Kreuzgelenke und / oder homokinetische Gelenke zum Einsatz kommen.

Die Wellen, welche an diesem schwenkbaren Lagerungspunkt angreifen, können vorzugsweise drehfeste Schiebestücke aufweisen, welche dazu ausgebildet sind, es zu ermöglichen, dass die Wellen längenveränderlich sind.

Hierdurch wird beim Hochklappen des beweglichen Teils des Flügels eine Verlängerung der Wellen ermöglicht, ohne dass es zu einer Entkopplung des Wellensystems kommt.

Das Wellensystem, welches im festen Teil des Flügels eingebaut ist, kann eine oder mehrere Vorrichtungen zur Begrenzung des Wellendrehmomentes aufweisen, wobei eine Vorrichtung zur Begrenzung des Wellendrehmomentes vorzugsweise möglichst nahe, am schwenkbaren Lagerungspunkt, vorzugsweise direkt benachbart zu dem schwenkbaren Lagerungspunkt, angeordnet ist.

Hierdurch wird das über die Verbindung zu übertragende Moment vorteilhaft reduziert und die Fehlerlasten im beweglichen teil des Flügels werden reduziert.

Bei einem im Rahmen der vorliegenden Erfindung zum Einsatz kommenden Hochauftriebssystem handelt es sich vorzugswiese um ein Slat-System. Grundsätzlich kann auch ein Flap-Sytem vorhanden sein.

Ein von einer erfindungsgemäßen Vorrichtung betätigtes Hochauftriebssystem kann von einer zentralen Antriebseinheit antreibbar oder angetrieben sein. In diesem Fall ist beispielsweise nur eine Antriebseinheit für sämtliche Hochauftriebssysteme (z.B. am linken und rechten Flügel eines Flugzeugs) vorhanden.

Alternativ kann von einer erfindungsgemäßen Vorrichtung betätigtes Hochauftriebssystem von einer Antriebseinheit pro Flügelseite antreibbar oder angetrieben sein.

In diesem Fall treibt beispielsweise die Antriebseinheit des linken Flügels die Hochauftriebssysteme des linken Flügels an, am rechten Flügel wird analog verfahren.

Alternativ kann das das Wellensystem jeweils einen festen Lagerpunkt vor und nach dem Drehpunkt des klappbaren Flügelteils aufweisen und zwischen den beiden Lagerpunkten kann vorzugsweise ein Gelenk angebracht sein, welches den kompletten Schwenkwinkel des beweglichen Flügelteils ermöglicht.

In anderen Worten ermöglicht das Gelenk einen Schwenkwinkel, welcher vorzugsweise identisch zu dem maximalen Schwenkwinkel des beweglichen Flügelteils ist.

Das Gelenk zwischen den beiden Lagerpunkten kann vorzugsweise auf beiden Seiten des Gelenks mit einem längenveränderbaren, drehfesten Schiebestück ausgestattet sein, um die Längenänderung zwischen den beiden Lagerpunkten, die sich beim Klappen des Flügels ergibt zu kompensieren.

Das Moment im Wellensystem kann durch einen Drehmomentbegrenzer begrenzt sein. Der Drehmomentbegrenzer ist vorzugsweise direkt vor bzw. benachbart zu dem Gelenk angebracht.

Hierdurch können vorzugsweise sowohl das Gelenk und die nachfolgenden Komponenten im Wellenstrang, als auch die Flügelstruktur im beweglichen Teil des Flügels vor großen Fehlerlasten geschützt werden.

Es kann sich um einen mechanischen Drehmoment Begrenzer und / oder um einen elektronischen Drehmomentbegrenzung handeln.

Das Hochauftriebssystem im beweglichen Teil des Flügels kann über den Antrieb der äußersten Klappe des Hochauftriebssystems betätigt werden. In diesem Fall sind vorzugsweis mehrere Antriebseinheiten vorhanden, die jeweils einer Klappe zugeordnet sind (Einzelklappenantrieb).

Eine solche Ausgestaltung ist besonders dann vorteilhaft, wenn sich bei dem Hochauftriebssystem um ein Flügel-Hinterkanten System (Flap System) handelt, da bei einem solchen System ein Einzelklappenantrieb sinnvoll ist, um angepasst an die Randbedingungen die inneren und äußeren Klappen getrennt fahren zu können.

Weiterhin kann im Wellensystem des festen Teils des Flügels und / oder im Wellensystem des beweglichen teils des Flügels eine Bremse vorhanden sein.

Eine solche Bremse stellt sicher, dass selbst bei einem Versagen des Gelenkes ein Arretieren des Systems möglich ist.

Weiterhin kann, wenn im festen und im beweglichen Teil jeweils eine Bremse vorhanden ist, die Bremse im beweglichen Teil des Flügels schwächer und damit kleiner ausgeführt werden, was angesichts der sehr beengten Platzverhältnisse im beweglichen Teil des Flügels vorteilhaft ist.

Zudem betrifft die vorliegende Erfindung ein Luftfahrzeug oder Fluggerät, vorzugsweise ein Flugzeug, mit mindestens einer Vorrichtung gemäß der vorliegenden Erfindung.

Auch umfasst die vorliegende Erfindung eine Komponente für ein Luftfahrzeug, beispielsweise ein Hochauftriebssystem mit mindestens einer Vorrichtung gemäß der vorliegenden Erfindung.

Zudem betrifft die vorliegende Erfindung ein Verfahren zur Betätigung mindestens eines Hochauftriebssystems eines Luftfahrzeugs, vorzugsweise eines Flugzeugs, wobei das Verfahren mittels einer erfindungsgemäßen Vorrichtung ausgeführt wird.

Ein anderer Aspekt der vorliegenden Erfindung betrifft eine Verwendung einer Vorrichtung gemäß der vorliegenden Erfindung und / oder eines Verfahrens gemäß der vorliegenden Erfindung zur Steuerung eines Luftfahrzeugs, vorzugsweise eines Flugzeugs.

Ein weiterer Aspekt der vorliegenden Erfindung betrifft eine Verwendung einer Vorrichtung gemäß der vorliegenden Erfindung und / oder eines Verfahrens gemäß der vorliegenden Erfindung in der Fertigung eines Luftfahrzeugs, vorzugsweise eines Flugzeugs.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können.

Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden, die Offenbarung ist also nicht auf explizit genannte Merkmalskombinationen beschränkt.

Weitere Einzelheiten und Vorteile der Erfindung werden anhand der in der Zeichnung dargestellten Ausführungsbeispiele näher erläutert.

Es zeigt:
- Figur 1:: zeigt beispielhaft ein geführtes Festlager, welches einen beweglichen Flügelteil mit einem festen Flügelteil verbindet und immer den halben Schwenkwinkel des freien Flügelendes ermöglicht;
- Figur 2:: zeigt beispielhaft eine erfindungsgemäße Vorrichtung mit einem Festlager, welches nicht winkelbezogen geführt ist, und
- Figur 3:: zeigt eine erfindungsgemäße Vorrichtung mit einem Gelenk, welches zwei Winkelgetriebe aufweist.

Wie in Fig. 1 gezeigt, weist der Flügel einen festen Teil 1 und einen beweglichen Teil 2 auf, welche miteinander in einem Drehpunkt bzw. Lagerungspunkt 3 verbunden sind.

Der feste Teil 1 und der bewegliche Teil 2 weisen jeweils ein Wellensystem mit mindestens einer Welle 4 zum Betätigen eines nicht gezeigten Hochauftriebssystems auf.

Die Wellen 4 sind über jeweils ein Gelenk 5 mit einem Festlager 8 gekoppelt.

Die Gelenke 5 und das Festlager 8 sind in diesem Beispiel so ausgestaltet, dass die Wellen 4 gekoppelt bleiben, auch wenn der bewegliche Teil 2 beispielsweise um 90° verschwenkt wird.

Der feste Teil 1 und der bewegliche Teil 2 sind jeweils mit einem Hebel 6 mit einem gemeinsamen Lagerungspunkt bzw. einem Lagerungsbauteil 7 verbunden.

Das Lagerungsbauteil 7 ist in einer Kulissenführung 8 geführt. Das Lagerungsbauteil 8 bzw. der Lagerungspunkt ist somit beweglich bzw. schwenkbar und variiert mit der Schwenkposition des beweglichen Teils 2.

Wird somit beispielsweise der bewegliche Teil 2 um 90° nach oben geklappt, so wandert das Lagerungsbauteil 7 in der Kulissenführung 8, bei der Darstellung in Fig. 1 nach oben.

Die Führung des Lagerungsbauteils 7 in der Kulissenführung 8 ist somit abhängig von dem Winkel zwischen dem beweglichen Teil 2 und dem festen Teil 1 des Flügels.

Das in Fig. 1 gezeigte Lager ermöglicht hierbei den halben Schwenkwinkel des beweglichen Teils, also in dem vorstehend genannten Beispiel eine Verschwenkung von ca. 45 °.

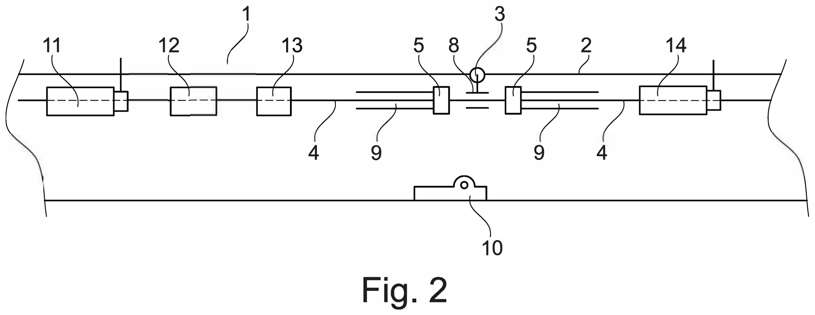

Fig. 2 zeigt einen größeren Ausschnitt einer erfindungsgemäßen Vorrichtung.

Auch bei der in Fig. 2 gezeigten Vorrichtung sind ein fester Teil 1 und ein beweglicher Teil 2 eines Flügels vorhanden, welche miteinander in einem Drehpunkt bzw. Lagerungspunkt 3 verbunden sind.

Die Wellen 4 sind auch in diesem Fall jeweils mit einem Gelenk 5 ausgestattet und über ein Festlager 8 miteinander gekoppelt.

Benachbart zu den Gelenken 5 ist jeweils ein Teleskopmechanismus 9 vorhanden, welcher dazu dient, die Länge der Wellen 4 jeweils der Schwenkposition des beweglichen Teils 2 anzupassen.

Der bewegliche Teil 2 kann relativ zu dem festen Teil 10 mittels eines Veriegelungsmechanimus 10 arretiert werden.

Der feste Teil 1 weist eine Antriebseinheit 11 für das nicht gezeigte Hochauftriebssystem des festen Teils 1, insbesondere eine Slat-Klappe davon, auf.

Neben der Antriebseinheit 11 ist eine Bremse 12 vorhanden, neben der ein Drehmomentbegrenzer 13 vorhanden ist.

Der bewegliche Teil 2 weist eine Antriebseinheit 14 für das nicht gezeigte Hochauftriebssystem des beweglichen Teils 2, insbesondere eine Slat-Klappe davon, auf.

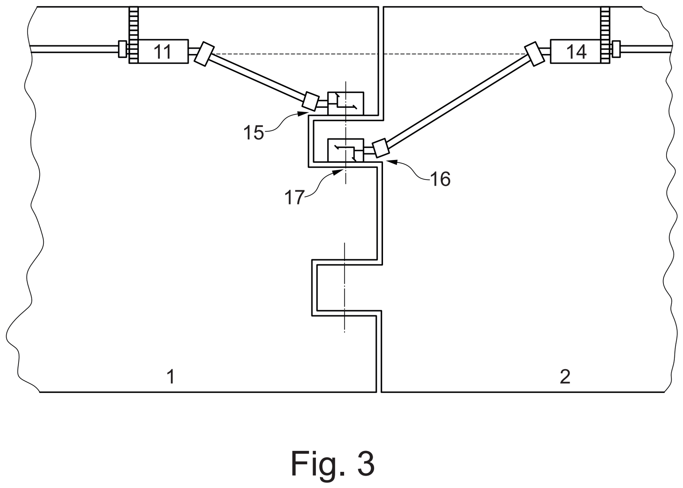

Gemäß einer weiteren Ausführungsform, welche in Fig. 3 gezeigt ist, kann die Drehbewegung des Wellensystems vom festen Flügelteil 1 in den beweglichen Flügelteil 2 auch mittels zweier Winkelgetriebe 15 und 16 stattfinden, welche sich vorzugsweise im oder nahe dem Drehpunkt 17 des Flügelgelenks befinden.

Dabei ist ein Winkelgetriebe 15 ortsfest im festen Teil 1 des Flügels und das zweite Winkelgetriebe 16 ortsfest mit dem schwenkbaren, beweglichen Teil 2 des Flügels verbunden.

Der Eingang des einen Getriebes 15 ist mit dem Wellensystem des Hochauftriebssystem des festen Flügelteils 1 und der Eingang des zweiten Getriebes 16 mit dem Wellensystem des Hochauftriebssystems des schwenkbaren, beweglichen Flügelteils 2 verbunden.

Die Ausgänge der Getriebe wiederum sind vorzugsweise mittels einer Welle miteinander verbunden.

Dadurch wird eine Verbindung zwischen den beiden Wellensystemen geschaffen, welche unabhängig vom Schwenkwinkel des beweglichen Teils 2 des Flügels immer zuverlässig die Drehbewegung übertragen kann.

Alternativ zur Ausführung mit zwei verbundenen Getrieben 15,16 ist selbstverständlich auch eine Variante mit einem kombinierten Getriebe möglich, bei dem der Eingang oder der Ausgang schwenkbar ist.

## Patentansprüche

1. Vorrichtung zur Betätigung eines Hochauftriebssystems eines Flügels mit einem festen Teil und einem beweglichen Teil, wobei eine Antriebseinheit zum Antreiben des Hochauftriebssystems und ein Gelenk zwischen dem festen Teil und dem beweglichen Teil des Flügels vorhanden ist, wobei das Gelenk derart ausgelegt ist, dass eine Wirkverbindung der Antriebseinheit mit dem im beweglichen Teil des Flügels angeordneten Hochauftriebssystem unabhängig von einer Position des beweglichen Teils des Flügels gewährleistet ist.

2. Vorrichtung gemäß Anspruch 1, **dadurch gekennzeichnet, dass** die Antriebseinheit in dem festen Teil des Flügels oder in einem Flugzeugrumpf angeordnet ist.

3. Vorrichtung gemäß Anspruch 1 oder 2, wobei der feste Teil und der bewegliche Teil des Flügels jeweils mit einem Hochauftriebssystem ausgestatte ist und ein Wellensystem vorhanden ist, welches das im festen Teil des Flügels befindliche Hochauftriebssystem mit dem im beweglichen Teil des Flügel befindlichen Hochauftriebssystem verbindet, derart ausgebildet ist, dass es bei einem Verschwenken oder Hochklappen des beweglichen Teils des Flügels eine Kopplung der Hochauftriebssysteme mit der Antriebseinheit aufrecht erhält.

4. Vorrichtung gemäß Anspruch 3, wobei das Wellensystem derart ausgelegt ist, dass es einen schwenkbar gelagerten Lagerungspunkt besitzt, welcher benachbart zu dem Schwenkpunkt des beweglichen Teils des Flügels gelagert ist und / oder mit dem Schwenkpunkt des beweglichen Teils des Flügels zusammenfällt.

5. Vorrichtung gemäß Anspruch 4, wobei das Wellensystem derart ausgelegt ist, dass der Lagerungspunkt des Wellensystems beim Verschwenken oder Hochklappen des beweglichen Teils des Flügels um einen Winkel geschwenkt wird, welcher ca. halb so groß ist wie der Winkel., um welchen der bewegliche Teil des Flügels schwenkbar ist oder geschwenkt wird.

6. Vorrichtung gemäß Anspruch 5, wobei das Wellensystem mindestens zwei Wellen aufweist, welche an diesem Lagerungspunkt des Wellensystems angreifen und welche jeweils mindestens ein Gelenk aufweisen, welches dazu ausgelegt ist, vorzugsweise in einem Zustand der drehenden Welle eine Verschwenkung des Lagerungspunkts des Wellensystems um einen Winkel zu ermöglichen, welcher , welcher ca. halb so groß ist wie der Winkel., um welchen der bewegliche Teil des Flügels schwenkbar ist oder geschwenkt wird.

7. Vorrichtung gemäß einem der vorhergehenden Ansprüche 3 bis 6 dass das Wellensystem jeweils einen festen Lagerpunkt vor und nach einem Lagerungspunkt oder Drehpunkt des beweglichen Teils des Flügels aufweist und vorzugsweise zwischen den beiden Lagerpunkten mindestens ein Gelenk vorhanden ist, ein verschwenken mindestens einer Welle des Wellensystems um einen Winkel ermöglicht, welcher so groß ist wie der Winkel, um welchen der bewegliche Teil des Flügels schwenkbar ist oder geschwenkt wird.

8. Vorrichtung gemäß Anspruch 7, wobei das mindestens eine Gelenk zwischen den beiden Lagerpunkten vorzugsweise auf beiden Seiten des Gelenks mit einem längenveränderbaren, drehfesten Schiebestück ausgestattet ist, welches dazu ausgelegt ist, eine sich beim Verschwenken des beweglichen Teils des Flügels ergebende Abstandsänderung zwischen den beiden Lagerpunkten zu kompensieren.

9. Vorrichtung gemäß einem der vorhergehenden Ansprüche, wobei es sich bei dem Gelenk um ein doppeltes Kreuzgelenk oder um ein doppeltes homokinetisches Gelenk handelt.

10. Vorrichtung gemäß einem der vorhergehenden Ansprüche, wobei das Moment im Wellensystem durch einen Drehmomentbegrenzer begrenzt ist, welcher vorzugsweise direkt benachbart zu dem Gelenk angeordnet ist.

11. Vorrichtung gemäß einem der vorhergehenden Ansprüche, wobei das Gelenk zwei miteinander gekoppelte Getriebe, vorzugsweise Winkelgetriebe aufweist, die vorzugsweise in einem Drehpunkt des beweglichen Teils des Flügels an dem festen Teil des Flügels angeordnet sind, wobei das Gelenk vorzugsweise dazu ausgelegt ist, eine Drehbewegung eines Wellensystems von dem festen Teil des Flügels in den bewgelichen Teil des Flügels zu übertragen.

12. Vorrichtung gemäß einem der vorhergehenden Ansprüche, wobei das Gelenk mindestens eine flexible und / oder biegsame Welle aufweist, welche dazu ausgelegt ist, eine Drehbewegung eines Wellensystems von dem festen Teil des Flügels in den bewgelichen Teil des Flügels zu übertragen.

13. Luftfahrzeug, insbesondere Flugzeug, mit mindestens einer Vorrichtung gemäß den Ansprüchen 1 bis 12.

14. Verfahren zur Betätigung mindestens eines Hochauftriebssystems eines Luftfahrzeugs, vorzugsweise eines Flugzeugs, wobei das Verfahren mittels einer Vorrichtung gemäß einem der Ansprüche 1 bis 12 ausgeführt wird.
